# DEMANDE DE BREVET EUROPEEN

(11) **EP 1 201 500 A1**
(43) Date de publication de la demande: **02.05.2002**
(21) Numéro de dépôt: 01402610.8
(22) Date de dépôt: 10.10.2001
(51) Int. Cl.: B60Q 1/26, F21V 13/04

(54) **Dispositif d'éclairage ou de signalisation pour véhicule automobile**

(30) Priorité: 23.10.2000 FR 0013657
(71) Demandeur: VALEO VISION, 93012 Bobigny Cédex (FR)
(72) Inventeur: Changeur, Fabien, 93012 Bobigny Cédex (FR); Duplessy, Régis, 93012 Bobigny Cédex (FR); Drouet, Jean-Paul, 93012 Bobigny Cédex (FR)

(57) **Abrégé**

La présente invention concerne un dispositif d'éclairage ou de signalisation pour véhicule automobile, comportant au moins une source de lumière (20, 20', 20"), un réflecteur (22) et une plaque (24) de diffusion de la lumière.

Selon la présente invention, le réflecteur (22) et la plaque (24) de diffusion de la lumière sont constitués d'éléments sensiblement plans faisant entre eux un angle (α, β) faible et non nul et délimitant entre eux un volume prismatique.

## Description

La présente invention concerne les dispositifs de signalisation pour véhicule automobile, et plus particulièrement ceux qui sont du type comportant une partie formant retour latéral ou retour d'aile.

L'expression « retour latéral » ou « retour d'aile » désigne la partie d'un feu de signalisation qui est destinée à être positionnée non pas sur la face avant ou arrière d'un véhicule, mais sur un flanc de celui-ci au niveau de la partie de raccordement d'une aile à cette face avant ou arrière.

Les réglementations imposent ou tolèrent des dispositifs de « rappel latéral », qui sont constitués de feux de signalisation destinés à fonctionner en même temps qu'un premier feu de signalisation émettant de la lumière vers l'avant ou vers l'arrière du véhicule, le feu de rappel latéral émettant simultanément de la lumière sur le côté du véhicule, vers la droite ou vers la gauche. De tels feux de rappel latéral, classiquement pourvus d'une source lumineuse et d'un miroir réflecteur montés dans un boîtier fermé par une glace ou un voyant, ont un encombrement spécifique minimal qui peut rendre malaisée leur implantation sur les côtés du véhicule.

On a déjà tenté de résoudre ce problème en prévoyant divers moyens pour que le feu de signalisation émette de la lumière à la fois dans une direction sensiblement parallèle à l'axe du véhicule et dans une direction sensiblement perpendiculaire à l'axe de ce véhicule, en n'utilisant qu'une source lumineuse unique. Par exemple, le document US-A-3 969 621 décrit un dispositif lumineux comportant une source lumineuse au foyer d'un réflecteur parabolique, un composant optique à réflexion totale étant disposé sur le trajet d'une moitié du faisceau lumineux, de manière à diriger cette moitié du faisceau lumineux latéralement par rapport au véhicule, tandis que l'autre moitié peut émerger du dispositif lumineux dans l'axe du véhicule.

Le document FR-A-2 378 234 décrit un feu de coin pour véhicule automobile comportant un réflecteur, une source lumineuse et un élément catadioptrique transparent placé transversalement à l'axe du réflecteur de façon à intercepter au moins une partie du faisceau lumineux réfléchi par le réflecteur, cet élément catadioptrique présentant sur sa face interne des aiguilles qui présentent chacune, au moins dans la fenêtre utile d'éclairement, au moins une facette définissant avec la surface externe plane de l'élément catadioptrique un prisme déviateur dont l'inclinaison est telle que le feu émette un second flux d'éclairement adjacent à un premier flux.

On connaît également par le document FR-A-2 695 362 un feu de signalisation à visibilité latérale, qui comporte une source lumineuse, des moyens pour colorer la lumière issue de cette source, un masque comportant des zones opaques et des zones transparentes réparties de manière à atténuer la perception des moyens de coloration lorsque le feu est éteint et observé de l'extérieur, le feu comprenant en outre, dans une région latérale du masque, au moins un barreau transparent incolore s'étendant sensiblement parallèlement à la direction d'ensemble du faisceau sortant du masque, le barreau formant guide de lumière pour le rayonnement issu de la source dans sa direction et possédant une face d'extrémité libre inclinée pour assurer par réflexion totale une ré-émission de ce rayonnement dans une direction générale essentiellement transversale à la direction d'ensemble.

Les feux de signalisation constitués selon les enseignements de ces documents présentent un encombrement relativement important, imposé par les moyens utilisés pour dévier latéralement une partie de la lumière émise dans l'axe du véhicule, et la forme de la glace de protection est elle-même imposée par ces moyens de déviation. Un tel encombrement du feu et une telle forme de la glace peuvent souvent s'avérer incompatibles avec les exigences des constructeurs automobiles. En effet, le volume disponible pour implanter des dispositifs d'éclairage ou de signalisation est de plus en plus réduit aussi bien à l'avant qu'à l'arrière d'un véhicule automobile moderne. De plus, les contraintes de l'aérodynamique et les conceptions des stylistes conduisent à des formes souvent très différentes de celles qui résultent uniquement de considérations techniques.

Il en résulte par exemple que la glace d'un dispositif d'éclairage et/ou de signalisation peut s'étendre dans des régions où elle n'a plus aucune fonction optique, mais seulement un rôle esthétique, par souci de continuité de formes ou de lignes. Il est alors courant de disposer dans ces régions, entre la glace de protection et les éléments de carrosserie du véhicule, un masque de style, pourvu d'un revêtement adéquat, ou, en l'absence de masque, de conformer le boîtier du dispositif d'éclairage ou de signalisation, alors visible derrière la glace de protection, pour qu'il ait l'aspect désiré.

Un exemple de dispositif d'éclairage et/ou de signalisation comportant une partie formant retour latéral dans laquelle la glace de protection n'a pas de fonction optique est donné par le document FR-B-2 732 932, qui s'attache à résoudre le problème de faire affleurer aussi bien que possible la surface du retour latéral du dispositif de signalisation au niveau de celle de la carrosserie, lors du montage de ce type de dispositif de signalisation sur la carrosserie.

On connaît encore du document US-A-4 680 680 un dispositif de signalisation dans lequel des zones de la glace peuvent remplir des fonctions différentes, à l'aide de filtres colorés et de prismes de Fresnel disposés à 45°.

On connaît aussi, par exemple des documents EP-A-0 830 984, US-A-4 929 866 ou EP-A-0 908 666 des dispositifs de signalisation dans lesquels une plaque inclinée d'un angle donné par rapport à la glace de sortie possède des stries inclinées à 45° par rapport à la glace pour réfléchir les rayons lumineux émis par des diodes électroluminescentes situées près du bord de la glace.

La présente invention se place dans ce contexte et elle a pour but de proposer un dispositif d'éclairage ou de signalisation dont l'encombrement, en particulier l'épaisseur, soit faible de manière à permettre facilement son implantation dans les espaces d'un véhicule où le volume est réduit et où on désire néanmoins disposer d'une fonction d'éclairage, de signalisation ou de rappel latéral, un tel dispositif d'éclairage ou de signalisation devant en outre être simple à assembler dans ces espaces de volume réduit, être fiable dans son fonctionnement, les performances photométriques répondant à la réglementation en vigueur, un tel dispositif devant en outre être peu onéreux.

La présente invention a donc pour objet un dispositif d'éclairage ou de signalisation pour véhicule automobile, comportant au moins une source de lumière, un réflecteur et une plaque de diffusion de la lumière.

Selon la présente invention, le réflecteur et la plaque de diffusion de la lumière sont constitués d'éléments lisses et continus sensiblement plans faisant entre eux un angle faible et non nul et délimitant entre eux un volume sensiblement prismatique.

Selon d'autres caractéristiques avantageuses et non limitatives de l'invention :
- la source de lumière est disposée au voisinage de la grande base du volume prismatique délimité par le réflecteur et la plaque de diffusion de la lumière ;
- l'extrémité du réflecteur et l'extrémité de la plaque de diffusion de la lumière les plus éloignées de la grande base du volume prismatique sont jointives ;
- l'extrémité du réflecteur et l'extrémité de la plaque de diffusion de la lumière les plus éloignées de la grande base du volume prismatique sont distantes d'une longueur inférieure à la longueur de la grande base du volume prismatique ;f
- la plaque de diffusion de la lumière est réalisée en un premier matériau transparent possédant un premier indice de réfraction et dans laquelle sont noyées des inclusions en un second matériau transparent possédant un second indice de réfraction différent du premier ;
- le réflecteur est réalisé sous forme de plaque transparente ;
- des aménagements de déviation de la lumière sont formés sur la face du réflecteur la plus éloignée de la source de lumière ;
- la plaque transparente formant le réflecteur est traversée par la lumière issue d'une deuxième source de lumière ;
- la deuxième source de lumière coopère avec un miroir pour constituer un feu de véhicule ;
- le réflecteur et la plaque de diffusion de la lumière sont disposés dans un boîtier, et le réflecteur est constitué par une portion du boîtier ;
- le réflecteur est réalisé sous forme de plaque en un premier matériau transparent possédant un premier indice de réfraction et dans laquelle sont noyées des inclusions en un second matériau transparent possédant un second indice de réfraction différent du premier ;
- une face de la plaque formant le réflecteur opposée à celle qui est dirigée vers la source de lumière est revêtue d'un matériau réfléchissant la lumière ;
- la source de lumière est constituée d'une pluralité de diodes électroluminescentes ;
- la source de lumière est constituée d'une pluralité d'ampoules à incandescence ;
- la source de lumière est constituée d'un tube fluorescent.

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1 représente une vue en coupe d'un dispositif de signalisation pour véhicule automobile, incorporant un dispositif de retour latéral dans une première application de la présente invention ;
- La Figure 2 représente une vue schématique en coupe du dispositif de retour latéral de la Figure 1 ;
- La Figure 3 représente une vue schématique en perspective du dispositif de la Figure 1 ;
- La Figure 4 représente une vue en perspective du dispositif de la Figure 3, en place dans un véhicule automobile ;
- La Figure 5 représente une vue analogue à celle de la Figure 2 d'un deuxième mode de réalisation ;
- La Figure 6 représente une vue schématique d'une variante de réalisation du dispositif de la Figure 2 ;
- La Figure 7 représente une vue schématique de la variante de la Figure 6 appliquée au mode de réalisation de la Figure 5 ;
- La Figure 8 représente une variante de réalisation du dispositif de la Figure 1 ;
- La Figure 9 représente une vue en coupe schématique du dispositif de la présente invention dans une deuxième application, et
- La Figure 10 représente une variante de réalisation du dispositif de la Figure 9.

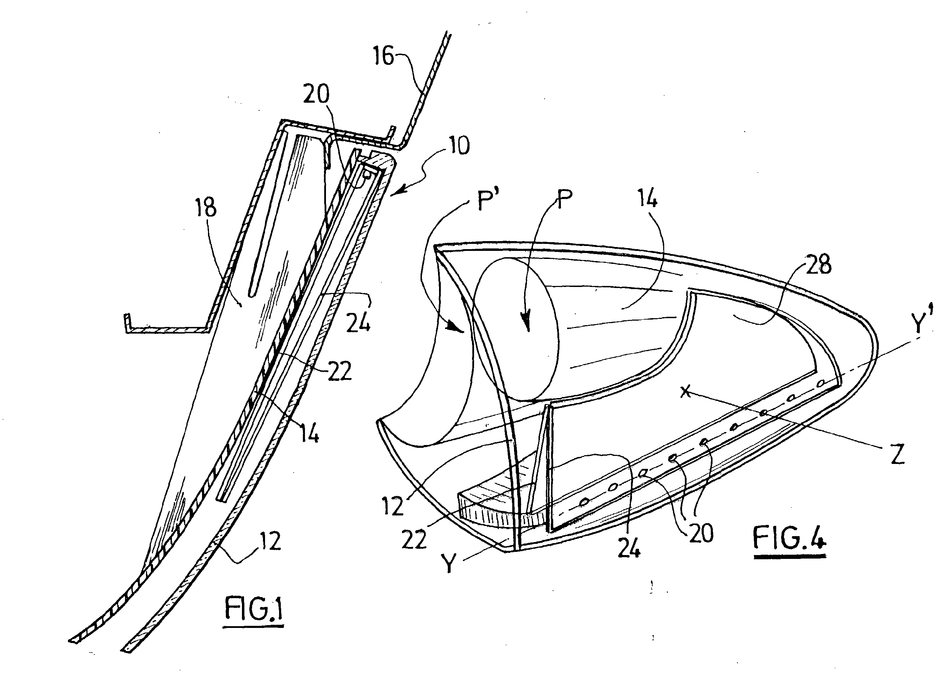

On a représenté sur la Figure 1, selon un plan de coupe, le retour latéral d'un dispositif de signalisation pour véhicule automobile, tel que décrit dans le document FR-B-2 732 932 précité. Ce retour latéral, désigné dans son ensemble par la référence 10, comprend une glace 12 et une partie de socle ou de boîtier 14. Un tel dispositif de signalisation est fixé sur une carrosserie d'automobile 16, de manière à ce que la surface de la glace 12 et celle de la carrosserie 16 soient situées aussi bien que possible dans le prolongement l'une de l'autre. Les moyens de fixation 18 du retour latéral du dispositif de signalisation sont décrits dans le document FR-B-2 732 932 précité, et ne font pas partie de la présente invention.

On conçoit donc bien que l'aménagement d'un feu de rappel latéral dans la zone comprise entre la glace 12 et le boîtier 14 pourra poser de nombreux problèmes d'implantation pour éviter toute interférence avec la glace 12, le boîtier 14, la carrosserie 16 et les moyens de fixation 18.

Conformément à la présente invention, ces problèmes sont résolus grâce à un dispositif de signalisation de conception nouvelle, ce dispositif ayant une épaisseur faible en regard de sa longueur et de sa hauteur.

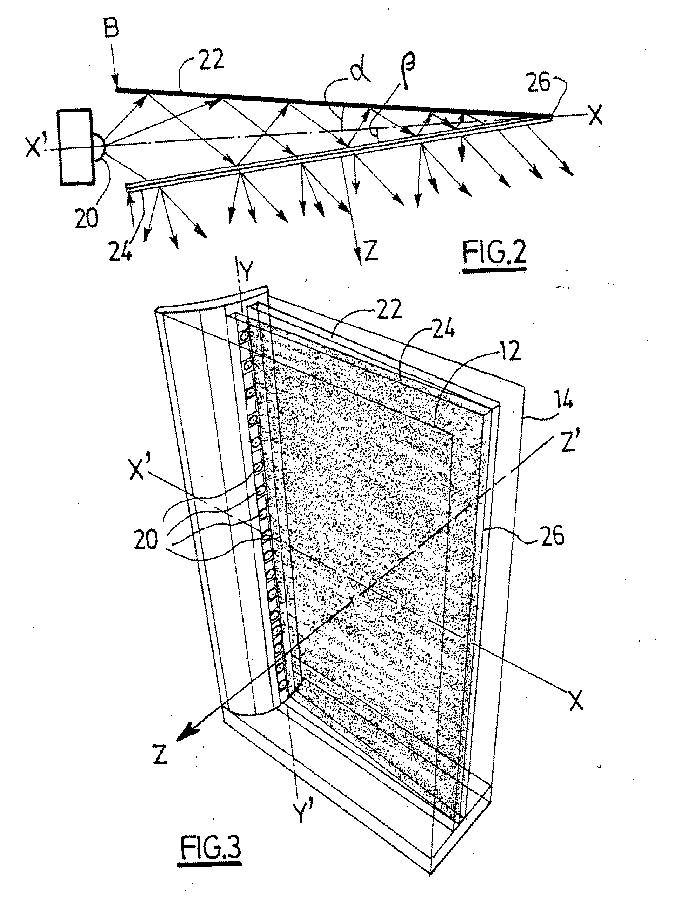

Un tel dispositif est représenté schématiquement en coupe sur la Figure 2. On voit sur cette Figure une source lumineuse 20 émettant un faisceau lumineux de manière sensiblement symétrique par rapport à un axe principal X'-X. Un premier écran plan lisse et continu 22, par exemple rectangulaire, est disposé dans une première moitié, située d'un côté de l'axe X'-X, du faisceau émis par la source 20 de manière à former par rapport à l'axe X'-X un angle α faible, par exemple inférieur à 10°. L'écran 22 constitue la surface réflectrice d'un réflecteur.

Dans la présente description, on appelle « réflecteur » ou « surface réflectrice » toute surface procurant au moins une réflexion diffuse.

Les rayons lumineux émis par la source 20 et réfléchis par le premier écran 22 sont reçus par un deuxième écran plan 24, lui aussi lisse et continu, disposé dans l'autre moitié du faisceau émis par la source 20 de manière à former par rapport à l'axe X'-X un angle β faible, par exemple inférieur à 10°, et de préférence symétrique de α par rapport à l'axe X'-X. L'écran 24 est de préférence de la même forme, en l'occurrence rectangulaire, que celle du premier écran 22, et il est de type transmissif, la transmission apportée par l'écran 24 étant accompagnée d'une diffusion. On pourra par exemple prévoir que l'écran 24 soit réalisé en un premier matériau transparent possédant un premier indice de réfraction et dans lequel sont noyées des inclusions en un second matériau transparent possédant un second indice de réfraction différent du premier. On pourra également prévoir que le premier écran 22 soit réalisé dans ce même matériau, la face opposée à celle qui est tournée vers la source lumineuse étant métallisée de manière à être réfléchissante, le premier écran 22 procurant donc une réflexion avec diffusion.

Selon un mode de réalisation de la présente invention, les deux écrans 22 et 24 sont jointifs le long d'une ligne 26 à leur extrémité la plus éloignée de la source lumineuse 20, de manière à délimiter entre eux un volume prismatique ou en coin, dont l'angle au sommet est égal à (α + β), et d'arête 26, la source lumineuse étant disposée au voisinage de la base B du volume prismatique ainsi délimité. Dans ce cas, tous les rayons lumineux émis par la source 20 dans l'angle solide d'émission de cette source sont soit incidents sur le premier écran 22 et réfléchis par ce dernier, éventuellement avec une diffusion, sur le deuxième écran 24, soit incidents directement sur le deuxième écran 24. D'autre part, les rayons lumineux incidents sur le deuxième écran 24, qu'ils proviennent directement de la source 20 ou qu'ils aient été préalablement réfléchis par le premier écran 22, sont partiellement transmis avec diffusion par le deuxième écran 24 et partiellement réfléchis par ce dernier en direction du premier écran 22, qui les renvoie à son tour en totalité, éventuellement avec diffusion, vers le deuxième écran 24, sur lequel ils sont encore partiellement transmis et partiellement réfléchis, et ainsi de suite.

De cette manière, on est assuré que la totalité du flux lumineux émis par la source 20 est transmis à travers le deuxième écran 24, après avoir subi des réflexions multiples entre les premier et deuxième écrans 22 et 24, ces réflexions étant à chaque fois diffuses sur le deuxième écran 24, et pouvant l'être sur le premier écran 22. Il en résulte que le deuxième écran 24, s'étendant sensiblement parallèlement à la direction de l'axe X'-X avec un angle β faible, diffuse la totalité du flux lumineux émis par la source 20, dans pratiquement toutes les directions autour d'une direction moyenne perpendiculaire à son plan, c'est à dire sensiblement à 80° de l'axe X'-X.

Cette propriété est valable au voisinage du plan de la Figure 2, c'est à dire du plan de source, défini comme étant le plan perpendiculaire à l'arête 26 formée par les écrans 22 et 24 et contenant la source lumineuse 20, la quantité de lumière transmise par une portion du deuxième écran 24 étant une fonction décroissante de la distance entre cette portion d'écran et le plan de source. Plus on s'éloigne de ce plan de source, plus la quantité de lumière émise par l'écran 24 diminue.

Pour que la diffusion de lumière par le deuxième écran 24 soit homogène sur toute la surface de ce dernier, c'est à dire dans tous les plans parallèles à ce plan de source, on pourra utiliser un dispositif fournissant d'une source lumineuse sensiblement ponctuelle une plage éclairante homogène de longueur importante, par exemple à l'aide d'un élément répartiteur de la lumière émise par la source et d'un écran redressant les rayons incidents sur lui vers une direction générale d'émission. Un tel dispositif est décrit dans le document FR-A-2 614 969.

On pourra également utiliser plusieurs sources lumineuses, ainsi qu'on l'a représenté sur la vue schématique en perspective de la Figure 3, certaines parties ayant été indiquées comme étant transparentes pour la clarté du dessin. Chacune de ces sources pourra être associée à un dispositif fournissant pour chacune une plage éclairante homogène de longueur importante, à l'aide d'éléments répartiteurs et d'écrans de redressement vers une direction générale d'émission, comme décrit par exemple dans le document FR-A-2 776 595.

On voit sur la Figure 3 que plusieurs sources lumineuses 20 sont régulièrement réparties le long d'une « ligne d'émission » Y'-Y, parallèle à l'arête 26 formée par la jonction entre les deux écrans 22 et 24. Chaque source lumineuse 20 contribue ainsi, dans son plan de source individuel, tel que défini plus haut, au flux lumineux total émis par l'écran 24. Un tel flux est émis dans une direction moyenne Z'-Z, autour d'un axe perpendiculaire au deuxième écran 24, c'est à dire faisant un angle d'environ 80° avec l'axe X'-X. On a également représenté sur la Figure 3 la glace 12 du retour latéral 10 ainsi que la partie de socle ou de boîtier 14 qui y sont adjacentes. On voit donc bien que la fonction feu de rappel latéral selon la présente invention peut être très facilement implantée dans le volume réduit entre la glace 12 et la partie de socle ou de boîtier 14, habituellement inutilisable, ainsi qu'on l'a représenté sur la Figure 1.

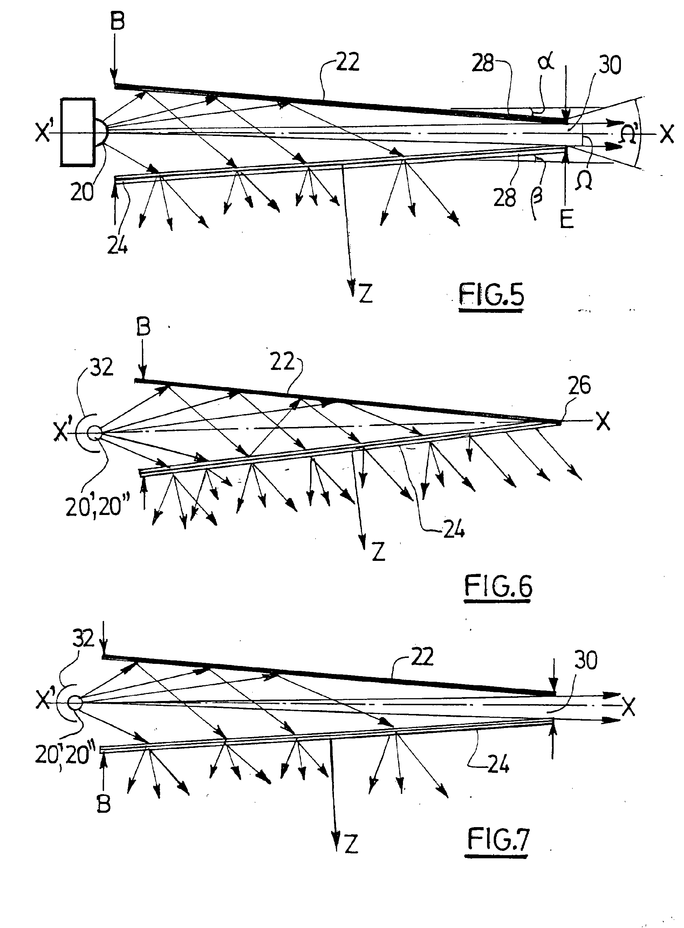

En fonction du volume disponible, ou de l'effet ou de l'aspect souhaité, les écrans 22 et 24 pourront avoir une forme autre que rectangulaire, ainsi qu'on l'a représenté sur la Figure 4. On a représenté sur cette Figure un dispositif d'éclairage, comportant par exemple des projecteurs P et P', le projecteur P' étant représenté partiellement. On voit sur cette Figure que la glace 12 et la partie de boîtier 14 adjacente permettent de loger une fonction de rappel latéral selon la présente invention. Cette fonction de rappel émet dans une direction moyenne Z'-Z, sensiblement perpendiculaire à l'axe longitudinal du véhicule, lui-même sensiblement parallèle à l'axe Y'-Y. L'extrémité 28 des écrans 22 et 24 éloignée des sources lumineuses 20 est conformée d'une part pour pouvoir être reçue dans l'espace entre le boîtier 14 et la glace 12, et d'autre part pour avoir une esthétique prédéterminée.

De même, en fonction du volume disponible, ou de l'effet ou de l'aspect souhaité, les écrans 22 et 24 pourront avoir une forme autre que plane, et pourront être légèrement incurvés.

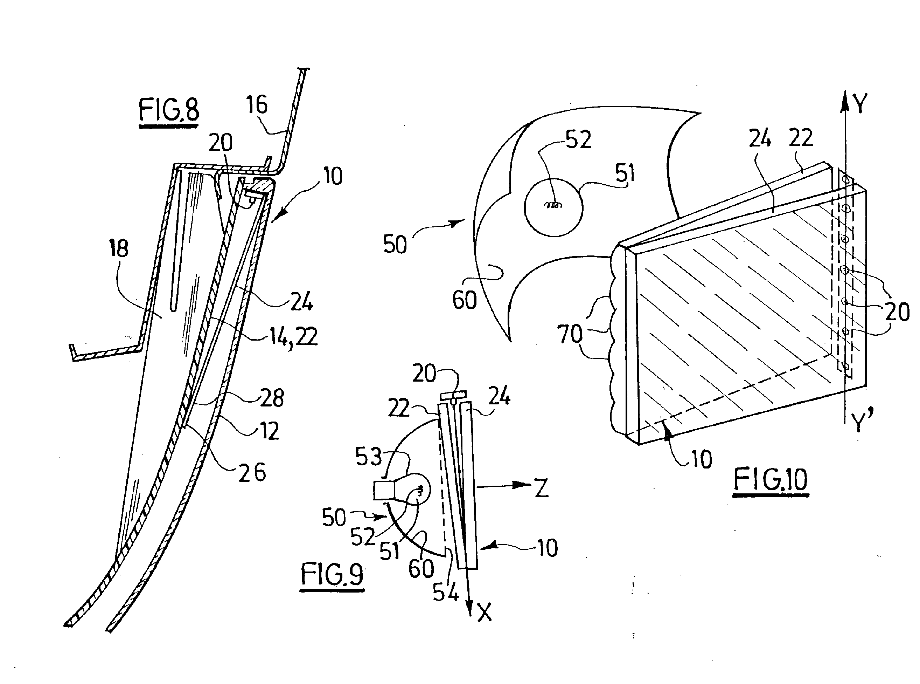

Pour réduire encore l'encombrement du dispositif selon la présente invention, on pourra prévoir que le premier écran réfléchissant 22 soit constitué par une portion du boîtier 14 lui-même, ainsi qu'on l'a représenté sur la Figure 8. Dans ce cas, on pourra prévoir un traitement de surface pour la partie du boîtier 14 remplissant la fonction de premier écran 22, pour augmenter son pouvoir réfléchissant et diffusant. Les éléments identiques à ceux qui ont été décrits plus haut jouent le même rôle, et le dispositif a un fonctionnement identique. Une description détaillée de la Figure 8 ne sera donc pas faite.

Selon un deuxième mode de réalisation de la présente invention, les extrémités des écrans 22 et 24 les plus éloignées de la source lumineuse 20 ou de la ligne d'émission Y-Y' sont disjointes, ainsi qu'on l'a représenté sur la Figure 5, et espacées d'une distance E, de manière à ménager entre eux une ouverture 30. Les écrans 22 et 24 forment, comme dans le mode de réalisation précédent, des angles α et β faibles avec l'axe moyen X'-X d'émission des sources lumineuses 20, et délimitent entre eux un volume prismatique, tronqué au niveau de l'ouverture 30, les sources lumineuses 20 étant disposées au voisinage de la grande base B du volume prismatique tronqué, de longueur supérieure à celle de l'ouverture (30).

Dans ce deuxième mode de réalisation, une partie des rayons lumineux émis par la source 20 dans l'angle solide d'émission de cette source sont :
- soit reçus par le premier écran 22 et réfléchis par ce dernier,
- soit reçus par le deuxième écran 24 et transmis avec diffusion par ce dernier vers l'extérieur ou réfléchis avec diffusion,
- soit transmis directement à travers l'ouverture 30.

Les rayons lumineux transmis par le deuxième écran 24, qu'ils proviennent directement de la source 20 ou qu'ils aient subi préalablement une ou plusieurs réflexions, sont émis dans une direction moyenne Z'-Z, perpendiculaire à l'écran 24 et sensiblement perpendiculaire à l'axe longitudinal du véhicule, comme dans le mode de réalisation précédent.

Les rayons lumineux issus de la source lumineuse 20 et traversant directement l'ouverture 30 sont compris dans un angle solide Ω, symétrique par rapport à l'axe X'-X, et dont la valeur ne dépend que de l'étendue de la source 20 et de la distance E entre les extrémités 28 des écrans 22 et 24.

Les rayons lumineux incidents sur le premier ou le deuxième écrans 22 ou 24, qu'ils soient directement issus de la source lumineuse 20 ou qu'ils aient été préalablement réfléchis par le deuxième ou le premier écran 24 ou 22 respectivement, peuvent également être amenés à finalement traverser l'ouverture 30. Ils sont alors compris dans un angle solide Ω', également symétrique par rapport à l'axe X'-X, et plus grand que l'angle solide Ω. La valeur de l'angle solide Ω' ne dépend que de l'étendue de la source 20 et des angles α et β que forment les écrans 22 et 24 avec l'axe X'-X.

D'autre part, l'intensité lumineuse des rayons contenus dans l'angle solide Ω, issus directement de la source 20, est supérieure à celle des rayons contenus dans l'angle solide Ω', qui ont subi au moins une réflexion sur les écrans 22 et/ou 24.

Le deuxième mode de réalisation permet ainsi de remplir une deuxième fonction. En effet, il suffit d'orienter le dispositif pour que l'axe moyen d'émission X'-X soit orienté de manière à être sensiblement parallèle à l'axe longitudinal du véhicule. Dans une telle configuration, en plus de la fonction de rappel latéral, qui est assurée comme dans le premier mode de réalisation par les rayons lumineux transmis par le deuxième écran 24, la fonction éclairage ou signalisation est également assurée par les rayons lumineux compris dans les angles solides Ω et Ω', symétriques par rapport à l'axe X'-X, qui est par hypothèse sensiblement parallèle à l'axe longitudinal du véhicule.

Pour une source lumineuse 20 donnée, d'étendue donnée et de luminance donnée, en choisissant convenablement la distance E entre les extrémités 28 des écrans 22 et 24 et les angles α et β que forment ces écrans 22 et 24 avec l'axe X'-X, il sera possible de déterminer avec précision la proportion du flux lumineux émis par la source 20 que l'on désire retrouver dans l'angle solide Ω, celle que l'on désire dans l'angle solide Ω', et celle que l'on désire qui soit transmise par le deuxième écran dans la direction Z. On pourra donc d'une part choisir quelle fonction supplémentaire à celle du rappel latéral on désire assurer, par exemple une fonction indicateur de clignotant de direction ou une fonction lanterne de ville, et d'autre part assurer que cette fonction supplémentaire sera remplie en respectant la réglementation en vigueur, les différentes fonctions de signalisation ayant des réglementations différentes en matière de photométrie et/ou de colorimétrie. De plus, les deux fonctions sont ainsi assurées par la même source lumineuse. Elles sont donc actives ou inactives simultanément, ainsi que l'exige la réglementation.

Le deuxième mode de réalisation pourra bien sûr être mis en oeuvre avec la variante de réalisation de la Figure 8, l'extrémité 28 du deuxième écran 24 étant légèrement distante de la partie de boîtier 14 remplissant la fonction de premier écran 22.

Les sources lumineuses 20 utilisés par le dispositif de la présente invention sont avantageusement constituées par des diodes électroluminescentes, dont la taille permet facilement leur implantation entre les écrans 22 et 24, sans augmenter l'encombrement du dispositif. On pourra également utiliser des ampoules 20' à filament incandescent également régulièrement réparties selon la ligne d'émission Y'-Y, ou un tube fluorescent 20" tel qu'un tube au néon, s'étendant de manière continue selon cette ligne d'émission Y'-Y, comme on l'a représenté sur les Figures 6 et 7. Dans ces deux cas, on pourra avantageusement utiliser un miroir récupérateur 32, pour récupérer le flux émis par l'ampoule 20' ou le tube 20" dans une direction opposée à l'arête 26 ou à l'ouverture 30 et le rediriger dans cette direction. Dans le cas où on utilise des diodes électroluminescentes ou des ampoules à filament incandescent, on pourra leur associer un dispositif fournissant pour chacune une plage éclairante homogène de longueur importante, à l'aide d'éléments répartiteurs et d'écrans de redressement vers une direction générale d'émission, comme décrit par exemple dans les document FR-A-2 614 96 ou FR-A-2 776 595 précités.

D'autres cas peuvent se présenter dans lesquels l'espace disponible n'est pas suffisant pour implanter une fonction d'éclairage ou de signalisation. C'est le cas par exemple lorsque plusieurs fonctions doivent être regroupées dans un même ensemble. La présente invention permet de résoudre de tels problèmes.

On a représenté sur la Figure 9 un feu 50 de véhicule, devant lequel un dispositif 10 tel que décrit plus haut a été placé. Le feu 50 comprend une lampe 51 munie d'un filament incandescent 52 situé dans la région du foyer d'un miroir parabolique 60 récupérateur de flux. Ce dernier dirige un rayonnement essentiellement parallèle sur la face arrière du premier écran 22 du dispositif 10 selon la présente invention. Dans cette application, le premier écran 22 est réalisé sous forme de plaque transparente, de sorte que le rayonnement parallèle engendré par le miroir 60 traverse cet écran 22 et parvient sur le deuxième écran 24, et il est transmis par cet écran 24 avec diffusion, comme on l'a expliqué plus haut. Le deuxième écran 24 est en un matériau tel que le faisceau diffusé par lui remplit convenablement les exigences photométriques.

Lorsque le rayonnement en sortie du feu 50 doit être coloré, selon la fonction qu'il remplit, cette coloration peut être donnée par exemple par le bulbe 53 de la lampe 51, par le matériau du premier écran 22 teinté de façon appropriée, ou encore par un écran intermédiaire 54 interposé entre le miroir 60 et le premier écran 22.

La fonction remplie par le feu 50 n'est donc pas modifiée par la présence du dispositif 10 selon la présente invention. Ce dispositif fonctionne comme on l'a vu plus haut. Lorsque la ou les sources lumineuses 20 sont allumées, le flux lumineux, après réflexions multiples sur les faces en regard des écrans 22 et 24, émerge du dispositif autour d'une direction moyenne Z perpendiculaire au deuxième écran 24.

De préférence, l'angle α que forme le premier écran 22 avec l'axe principal X'-X d'émission de la source 20 sera choisi, en fonction du matériau constituant cet écran 22, pour que les rayons lumineux issus directement de la source 20 subissent une réflexion totale sur l'écran 22, et l'angle β entre le deuxième écran 24 et l'axe principal X'-X sera choisi, en fonction du matériau constituant cet écran 24, pour que les rayons lumineux issus directement de la source 20 puissent pénétrer dans l'écran 22. D'autre part, les rayons lumineux qui pourraient, après des réflexions multiples, traverser l'écran 22, transparent, seraient alors reçus par le miroir 60 et renvoyés vers l'écran 22. On est donc bien assuré que la totalité du flux lumineux émis par la source 20 sera transmis par le deuxième écran 24.

Si la colorimétrie du feu 50 est obtenue par la coloration du matériau du premier écran 22, la couleur du faisceau émergeant du dispositif 10 lorsque les sources lumineuses 20 sont allumées et que la lampe 51 est éteinte sera influencée par la couleur du premier écran 22. Si on désire que les fonctions du feu 50 et du dispositif 10 aient des couleurs différentes, il suffira que la couleur du faisceau du feu 50 soit obtenue par le bulbe 53, un écran intermédiaire 54, ou une teinte portée par la face du premier écran 22 tournée vers la lampe 51.

De cette manière, lorsque seules les sources lumineuses 20 sont allumées, un flux lumineux sera émis au travers du deuxième écran 24 dans la direction Z, comme on l'a vu plus haut, la couleur de ce flux étant fixée par celle des sources 20. Lorsque seule la lampe 51 est allumée, le flux lumineux réfléchi par le miroir 60 sera également émis au travers du deuxième écran 24 dans la direction Z, la couleur de ce flux étant fixée par le bulbe 23 ou un écran intermédiaire 54. Il en résulte que les fonctions du feu 50 et du dispositif pourront être parfaitement différenciées par leur couleur ou leur intensité lumineuse. L'intensité lumineuse émise par la lampe 51 sera supérieure à celle de la ou des sources lumineuses 20, de façon à ce que, lorsque les sources lumineuses 20 et 52 sont allumées simultanément, le flux lumineux total réponde aux exigences photométriques réglementaires pour la fonction remplie par le feu 50.

Le dispositif 10 pourra par exemple remplir la fonction de lanterne arrière de véhicule, et le feu 50 être un feu de stop, les photométries et colorimétries de ces deux fonctions étant chacune conforme à la réglementation. Grâce à l'invention, il est ainsi possible que la même portion de la surface du deuxième écran 24 émette des faisceaux lumineux différents remplissant des fonctions différentes. L'ensemble dans lequel sont logés le feu 50 et le dispositif 10 peut donc être d'un encombrement plus faible.

Un avantage présenté par l'invention réside dans le fait que le deuxième écran 24, diffusant, empêche de voir distinctement l'espace situé derrière lui. De cette manière, un élément teinté destiné à donner sa couleur spécifique au faisceau lumineux à engendrer sera peu perceptible ou invisible de l'extérieur, pour ainsi réaliser un dispositif d'éclairage et de signalisation d'aspect extérieur essentiellement incolore, comme peuvent fréquemment le souhaiter les stylistes. Par exemple, plusieurs feux 50 pourront être installés derrière un seul dispositif 10, chaque feu remplissant sa fonction, et les feux étant individuellement peu perceptibles ou invisibles de l'extérieur.

La Figure 10 illustre une autre forme de réalisation, selon laquelle on combine dans le dispositif 10 la fonction de diffusion de la lumière, par l'intermédiaire du deuxième écran 24 comme on l'a vu plus haut, et des aménagements de déviation de la lumière par réfraction, par l'intermédiaire du premier écran 22, transparent dans ce mode de réalisation comme on l'a vu plus haut. Dans l'exemple représenté, il s'agit d'aménagements toriques 70, formés sur la face du premier écran 22 tournée vers le feu 50, et destinés à réaliser en propre un étalement du faisceau lumineux qui se combine avec la diffusion réalisée par le deuxième écran 24.

De la sorte, le faisceau obtenu pour le feu 50 véhicule automobile résulter de la combinaison des déviations réalisées au niveau des tores 70 et au niveau de la diffusion réalisée par le deuxième écran 24. De façon avantageuse, une partie de la déviation étant assurée par le deuxième écran 24, les tolérances de fabrication des tores 70 pourront être plus larges que dans le cas de glaces uniquement déviatrices conventionnelles, où les tores doivent assurer eux-mêmes la totalité de la répartition du faisceau, généralement parallèle, fourni par le miroir 60.

On a donc bien réalisé selon un aspect de la présente invention, dans un dispositif d'éclairage ou de signalisation du type comportant une partie formant retour latéral, une source lumineuse d'épaisseur suffisamment faible pour pouvoir être disposée dans cette partie formant retour latéral de manière à former un dispositif de rappel latéral. Ce dispositif de rappel latéral est en outre particulièrement simple à assembler par lui-même aussi bien que dans la partie formant retour latéral, il est fiable dans son fonctionnement, et ses performances photométriques répondent à la réglementation en vigueur, et il est particulièrement peu onéreux. Selon un autre aspect de la présente invention, on a réalisé une source lumineuse ayant une fonction déterminée et d'épaisseur suffisamment faible pour pouvoir être disposée devant un dispositif d'éclairage ou de signalisation ayant une autre fonction déterminée, sans augmentation sensible de l'encombrement de ce dispositif d'éclairage ou de signalisation.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que, lorsque seule la fonction de rappel latéral est utilisée, la ou les sources lumineuses pourront être disposées selon une direction quelconque, horizontale, verticale ou oblique, en fonction du volume disponible et/ou de l'effet esthétique recherché. De même, les premier et deuxième écran pourront être sensiblement plans, c'est à dire légèrement courbes, en fonction du volume disponible et/ou de l'effet esthétique recherché. C'est ainsi encore que la ou les sources lumineuses ainsi que le premier et/ou le deuxième écran pourront être colorés, selon la fonction dont le rappel latéral est désiré. La couleur ambre pourra par exemple être choisie pour réaliser un rappel latéral d'indicateur clignotant de direction. Le dispositif selon la présente invention pourra également être utilisé pour assurer l'éclairage intérieur d'un véhicule automobile, dans le cas où la place disponible pour l'installation d'un tel éclairage serait limitée, ou dans le cas où on désirerait obtenir une qualité d'éclairage particulière. Il est enfin des cas où le deuxième écran pourra être constitué de la glace du dispositif d'éclairage ou de signalisation elle-même, ou d'une partie de cette glace.

## Revendications

1. Dispositif d'éclairage ou de signalisation pour véhicule automobile, comportant au moins une source de lumière (20, 20', 20"), un réflecteur (22) et une plaque (24) de diffusion de la lumière, **caractérisé en ce que** le réflecteur (22) et la plaque (24) de diffusion de la lumière sont constitués d'éléments lisses et continus sensiblement plans faisant entre eux un angle (α, β) faible et non nul et délimitant entre eux un volume sensiblement prismatique.

2. Dispositif d'éclairage ou de signalisation selon la revendication 1, **caractérisé en ce que** la source de lumière (20, 20', 20") est disposée au voisinage de la grande base (B) du volume prismatique délimité par le réflecteur (22) et la plaque de diffusion de la lumière (24).

3. Dispositif d'éclairage ou de signalisation selon la revendication 2, **caractérisé en ce que** l'extrémité (28) du réflecteur (22) et l'extrémité (28) de la plaque (24) de diffusion de la lumière les plus éloignées de la grande base (B) du volume prismatique sont jointives.

4. Dispositif d'éclairage ou de signalisation selon la revendication 2, **caractérisé en ce que** l'extrémité (28) du réflecteur (22) et l'extrémité (28) de la plaque (24) de diffusion de la lumière les plus éloignées de la grande base (B) du volume prismatique sont distantes d'une longueur (E) inférieure à la longueur de la grande base (B) du volume prismatique.

5. Dispositif d'éclairage ou de signalisation selon la revendication 1, **caractérisé en ce que** la plaque (24) de diffusion de la lumière est réalisée en un premier matériau transparent possédant un premier indice de réfraction et dans laquelle sont noyées des inclusions en un second matériau transparent possédant un second indice de réfraction différent du premier.

6. Dispositif d'éclairage ou de signalisation selon la revendication 1, **caractérisé en ce que** le réflecteur (22) est réalisé sous forme de plaque transparente.

7. Dispositif d'éclairage ou de signalisation selon la revendication 6, **caractérisé en ce que** des aménagements (70) de déviation de la lumière sont formés sur la face du réflecteur (22) la plus éloignée de la source de lumière (20, 20', 20").

8. Dispositif d'éclairage ou de signalisation selon la revendication 6 ou la revendication 7, **caractérisé en ce que** la plaque transparente formant le réflecteur (22) est traversée par la lumière issue d'une deuxième source de lumière (52).

9. Dispositif d'éclairage ou de signalisation selon la revendication 8, **caractérisé en ce que** la deuxième source de lumière (52) coopère avec un miroir (60) pour constituer un feu (50).

10. Dispositif d'éclairage ou de signalisation selon la revendication 1, la source de lumière (20, 20', 20"), le réflecteur (22) et la plaque (24) de diffusion de la lumière étant disposés dans un boîtier (14), **caractérisé en ce que** le réflecteur (22) est constitué par une portion du boîtier (14).

11. Dispositif d'éclairage ou de signalisation selon la revendication 1, **caractérisé en ce que** le réflecteur (22) est réalisé sous forme de plaque en un premier matériau transparent possédant un premier indice de réfraction et dans laquelle sont noyées des inclusions en un second matériau transparent possédant un second indice de réfraction différent du premier.

12. Dispositif d'éclairage ou de signalisation selon la revendication 8, **caractérisé en ce qu'**une face de la plaque formant le réflecteur (22) opposée à celle qui est dirigée vers la source de lumière (20, 20', 20") est revêtue d'un matériau réfléchissant la lumière.

13. Dispositif d'éclairage ou de signalisation selon la revendication 1, **caractérisé en ce que** la source de lumière (20) est constituée d'une pluralité de diodes électroluminescentes (20).

14. Dispositif d'éclairage ou de signalisation selon la revendication 1, **caractérisé en ce que** la source de lumière est constituée d'une pluralité d'ampoules à incandescence (20').

15. Dispositif d'éclairage ou de signalisation selon la revendication 1, **caractérisé en ce que** la source de lumière est constituée d'un tube fluorescent (20").
